# EUROPEAN PATENT SPECIFICATION

(11) **EP 1 267 573 B1**
(45) Date of publication and mention of the grant of the patent: **09.07.2008**
(21) Application number: 02254114.8
(22) Date of filing: 13.06.2002
(51) Int. Cl.: H04N 5/445

(54) **Television system with electronic programme guide**
Fernsehsystem mit elektronischem Programmführer
Système de télévision avec guide de programmmes électroniques

(30) Priority: 15.06.2001 GB 0114583
(43) Date of publication of application: 18.12.2002
(73) Proprietor: Pace Micro Technology Plc, Saltaire, Shipley, BD18 3LF (GB)
(72) Inventor: Mountain, Dale, Bradford BD15 9LB (GB)
(74) Representative: Tomkinson, Alexandra

(56) References cited:
- WO-A-98/37695
- US-A- 5 805 235
- US-A- 6 014 184

## Description

The invention which is the subject of this application relates to a system and method for the display of information to a viewer of a television system. Said system typically comprises a television set with a display screen, and said set is connected to or includes a broadcast data receiver (BDR) to receive digital data broadcast from a remote location. The data typically comprises video and audio data, from which television programmes can be generated, and auxiliary data from which other services can be generated. One such further service is an Electronic Programme Guide (EPG) which is an on screen display which can show a variety of information, including a series of grids to show details such as time, channel and the title of programmes available for viewing from a range of available channels and more specific information relating to user selected programmes.

The EPG replaces traditional newspaper or magazine listings of programmes and is required because of the quickly increasing number of channels which are available for viewing. However, while the EPG is a useful tool for the viewer of a television system, the user is required to first select the EPG option and then go through a number of screen displays and make a number of selections to make a viewing choice. While they are doing this the viewer is not watching any programme and therefore may be missing an important or entertaining part of a programme and/or may be irritated by the number of selections, typically via remote control key presses, which they are required to make.

US6,014,184 discloses an EPG system which can generate a display window relating to individual programmes and which also allows a viewer's preferred channels to be stored and recalled for display in a list format, according to selections made by a user. US 5,805,235 provides a further example of an EPG system which provides a display window with information relating to a particular programme and which provides a number of on-screen icons for the selection of various functions by a user. W098/37695 discloses a user-operable EPG which displays brief information relating to a number of programmes in a list or grid format. A particular programme in the list/grid may be highlighted by a user such that more detailed information for that programme is displayed in another portion of the display. The EPG display takes up a substantial portion of the screen and so, in order to allow continued viewing of the video display whilst the EPG display is on screen, the video display is reduced in size.

The aim of the present invention is to provide an improved EPG service and furthermore an improvement which, once activated, can provide information to the viewer without the viewer having to subsequently select to access the same.

The invention is as defined in claim 1. The dependent claims relate to preferred embodiments.

The EPG generates the display to include the time, programme title and channel on which the programme is to be transmitted.

Typically the subset of selected channels is generated by the data receiving means in response to viewer selection instructions received by the data receiving apparatus.

Preferably the display is generated as a window display on the display screen to allow any video display being viewed at that time to continue to be partially viewable. The display typically remains on the screen for a predetermined period of time whereupon at the expiry of the time period the display is removed.

Typically the display is generated a period of time prior to the transmission time of the programme.

Typically the scrolling occurs at fixed time intervals.

Preferably, the information relates to programmes shown on a subset of channels selected by the viewer from those channels which are available for viewing. The information is displayed for the subset of channels in a continuous loop until the display is selected to be removed by the viewer. Typically the display which is generated includes information relating to programmes currently and next to be shown on one channel.

Thus, the display is not generated for every available channel but rather when a programme from a list of selected channels is due to be displayed. Preferably the facility of the invention as herein described can be enabled or disabled by the input of a control signal by the viewer, typically via a remote control.

By providing animation of the display so the size of the display with respect to the screen can be minimised and the amount of information displayed to the viewer maximised over a given time period without the need for the viewer to continually enter control signals to change the display via a remote control device or miss what they are already watching. Furthermore the information is focussed to the channels of interest to the viewer.

Thus the viewer can instantly see what programs are showing now and next on other channels. This is in contrast to current systems where, if a viewer wants to see what is on other channels, they must continually use the remote control to scan through the channels on the EPG.

The animation of the display is such that the programme and channel information is displayed in a "carousel" fashion.

Specific embodiments of the invention are now described with reference to the accompanying drawings; wherein
Figure 1 illustrates a display in accordance with the invention in a first embodiment;
Figure 2A - C illustrate a display in accordance with the invention in a second embodiment.

Conventionally, many viewers only watch programmes which are broadcast on a subset of the television channels which are selected from the complete range of channels which are available. The subset of channels can typically relate to the viewers own personal interests and preferences. However, in practice the viewer can often miss a programme they would have wished to watch because they were unaware of the fact that it is being transmitted.

This invention makes reference to a subset of a specific list of channels which are stored in the memory of the television system, typically as part of a Broadcast Data Receiver (BDR), which is the apparatus provided to receive and process the video, audio and auxiliary data from which the television programmes and auxiliary services such as the EPG can be generated.

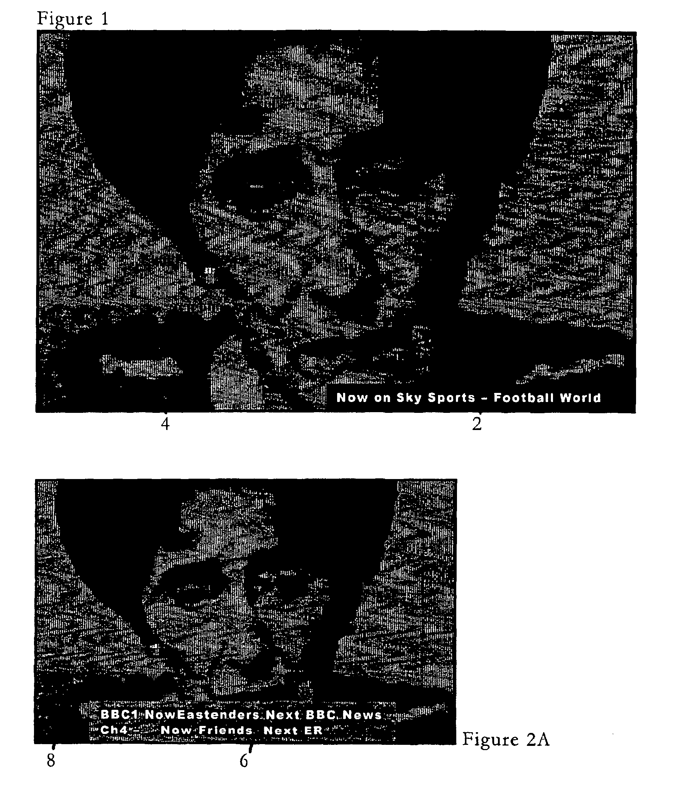

Thus in accordance with the invention the viewer generates a list of preferred channels which becomes the subset of television channels, details of which are held in the memory in the BDR. The BDR receives data indicating the start and end times of programmes and when EPG data indicating this is received, any data received for any of the channels in the stored subset which indicates a programme change, i.e. indicating the end of one programme and the start of the next, the BDR processes the same and uses it to trigger and generate a display, preferably of a relatively small size. The message display 2 is generated on the display screen 4 of the television system as shown in Figure 1 and includes information which indicates to the viewer that a new programme is available for viewing on one of the channels in the previously selected subset of channels. The information provided includes the programme title, transmission time and channel location.

As the display is generated for a programme to be shown on one of the channels selected by the viewer there is a reasonable case that the programme is of potential interest to them and the viewer will not regard the display as being unnecessary or irritating and as being of benefit to them

The system of the present invention has the benefit of being channel based in that once the channels have been selected, then the programmes subsequently available on those channels are indicated to the viewer rather than just one particular programme. It also means that the viewer is not required to have knowledge of a particular programme prior to the display and therefore the system of this invention is a provider of information rather than simply a conventional programme reminder service.

The present invention therefore provides a means for the viewer to be aware of programs happening on their favourite channels and hence they will be aware of programs which they otherwise wouldn't be aware of.

Figures 2A-C illustrate a further embodiment of the invention wherein the display which is used is particularly informative and allows the display of a relatively large range of information in a small display window 6 on the screen 8. The embodiment shows the display of the current programme being shown and the next program to be shown for a subset of channels, BBC1, Channel 4 and Sky 1. The information relating to the programmes could alternatively be with respect to all available channels but more preferably relates to those channels in the preselected subset of the channels.

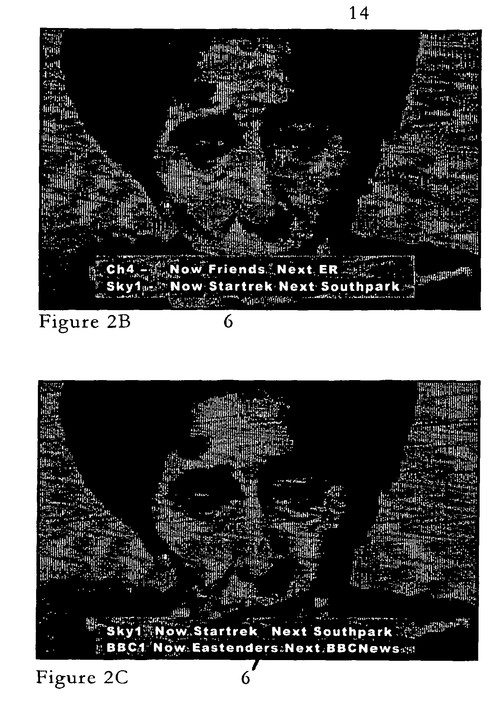

The display 6 is generated in a scrolling carousel fashion by providing a scrolling loop of either 1 or 2 lines of text. In Figure 2A, programme information for the first channel BBC1 and Channel 4 is shown. The display 6 then changes, 10 seconds later, to that shown in Figure 2B by means of a scrolling loop which causes the programme information for the channel BBC 1 to disappear, and programme information for Channel 4 to scroll up and be shown on the display along with information for the Channel Sky 1. A further 10 seconds pass and the information for the channel, Sky 1, scrolls up to replace that for Channel 4 in the display 6 and the information of BBC1 is again introduced as shown in Figure 2C. It should be appreciated that the display 6 can be provided to carry information for more than one channel and the scrolling can be set at any desired number of lines to scroll in one movement and at selected time intervals. The scrolling movement can then continue for as long as the viewer wishes the display to be shown and when the end of the channels in the subset of channels is reached, the channel at the start of the subset is again displayed so as to form a loop of channel information.

In one embodiment the display window can be generated using transparent colours so it does not impact the viewing of the video image 8 being displayed on the screen.

The provision of the scrolling animation of the display allows the viewer to be aware of programmes available for viewing without the need for repeatedly pressing remote control buttons to generate the repeated control signals. This invention therefore allows the viewer to keep track of what is or is about to be transmitted on their favourite channels without the need for remote control interaction or disturbing current viewing.

## Claims

1. A television system comprising a display screen (4;8) connected to a receiving means for receiving digital data broadcast from a remote location, said receiving means including the facility to generate an electronic programme guide (EPG) on the display screen (4;8), said EPG generated from received data and relating to television programmes and television channels available for selection for viewing at that instant of use of the system and/or in the future, wherein selection means are provided to allow the viewer to identify and select a subset of channels from television channels available for display via the system and wherein, at and/or prior to the time for transmission of programmes on one or more channels in the subset of channels, a display (2;6) is generated on screen to indicate to the viewer information relating to the programmes, said display (2;6) when generated, is animated in that the display (2;6) changes over time with lines of text relating to the said programmes being introduced and removed to and from the display after successive time periods, the successive lines of text being looped in a carousel fashion and each of said lines of text relating ,to the said programmes, the generation of the display being performed by the data receiving means with respect to the receipt, of data which indicates that a programme is about to start or the receipt of data which indicates that the preceding programme has ended and at that time the display is generated on screen so as to alert the viewer of the television system, said display indicating at least the channel location and title of the said programmes which are about to start on channels from the subset of channels and the display being generated without the viewer reading to interact with the system in relation to the programmes nor have knowledge of the programmes prior to the display being generated.

2. A system according to claim 1 **characterised in that** the EPG generates the display (2;6) to include the time at which the programme is to be transmitted.

3. A system according to claim 1 **characterised in that** the subset of selected channels is generated by the data receiving means in response to viewer selection instructions received by the data receiving apparatus.

4. A system according to claim 1 **characterised in that** the display (2;6) is generated as a window display (2;6) on the display screen (4;8) to allow any video display being viewed at that time to continue to be partially viewable.

5. A system according to claim 1 **characterised in that** the display (2;6) remains on the screen (4;8) for a predetermined period of time whereupon at the expiry of the time period the display (2;6) is removed.

6. A system according to claim 1 **characterised in that** the display is generated a period of time prior to the transmission time of the programme.

7. A system according to claim 1 **characterised in that** the scrolling occurs at fixed time intervals.

8. A system according to claim 1 **characterised in that** the display (2;6) which is generated includes information relating to programmes currently and next to be shown on one channel.

## Patentansprüche

1. Fernsehsystem mit einem Anzeigebildschirm (4;8) der an einer Empfangsvorrichtung zum Empfang von digitalen Daten die von einem entfernten Ort gesandt werden angeschlossen ist, wobei die genannte Empfangsvorrichtung die Möglichkeit bietet einen elektronischen Programmführer (EPG) auf dem Anzeigebildschirm (4;8) abzubilden, wobei der genannte EPG von empfangenen Daten generiert wird und sich auf Fernsehprogramme und Fernsehkanäle bezieht, die zur Ansicht während des aktuellen Betriebs des Systems bzw. in Zukunft ausgewählt werden können, wobei Auswahlmittel es Zuschauern ermöglichen eine Auswahl Kanäle von den zur Ansicht erhältlichen Fernsehkanälen über das System auszuwählen und wobei während bzw. vor der Übertragung der Programme auf einem oder mehreren Kanälen in der Auswahl der Kanäle eine Anzeige (2;6) auf dem Bildschirm erzeugt wird die dem Zuschauer Informationen über die Programme bietet, wobei die genannte generierte Anzeige (2;6) animiert ist indem die Anzeige (2;6) sich laufend ändert, wobei Textzeilen bezüglich des genannten Programms auf dem Bildschirm nacheinander erscheinen und wieder gelöscht werden, wobei die aufeinanderfolgenden Textzeilen eine Schlaufe durchlaufen und jede der genannten Textzeilen sich auf die genannten Programme bezieht, wobei die Anzeige von der Datenempfangsvorrichtung erzeugt wird in bezug auf den Empfang von Daten, die anzeigen, dass ein Programm in Kürze anfängt oder der Empfang von Daten die das Ende des vorhergehenden Programms anzeigen und zu diesem Zeitpunkt die Anzeige auf dem Bildschirm erscheint um den Zuschauer des Fernsehsystems darauf aufmerksam zu machen; wobei die Anzeige zumindest die Kanäle und Titel der genannten Programme anzeigt, die in Kürze auf den Kanälen der Auswahl der Kanäle beginnen werden und wobei die Anzeige erzeugt wird ohne dass der Zuschauer etwas im System in Bezug auf die Programme eingeben muss oder Kenntnis von den Programmen vor Erzeugen der Anzeige haben muß.

2. System gemäß Anspruch 1, **dadurch gekennzeichnet dass**, der EPG die Anzeige (2;6) einschließlich der Zeit der Übertragung des Programms generiert.

3. System gemäß Anspruch 1, **dadurch gekennzeichnet dass**, die Auswahl der gewählten Kanäle von der Datenempfängervorrichtung generiert wird gemäß Auswahlanweisungen vom Zuschauer die von der Datenempfangsvorrichtung empfangen wurden.

4. System gemäß Anspruch 1, **dadurch gekennzeichnet dass**, die Anzeige (2;6) auf dem Anzeigebildschirm (4;8) als eine Fensteranzeige (2; 6) generiert wird, so dass aktuelle Videoanzeigen gleichzeitig immer noch teilweise sichtbar bleiben.

5. System gemäß Anspruch 1, **dadurch gekennzeichnet dass**, die die Anzeige (2;6) auf dem Bildschirm (4;8) für eine vorbestimmte Zeit bleibt wonach bei Ablauf der Zeitperiode die Anzeige (2;6) verschwindet.

6. System gemäß Anspruch 1, **dadurch gekennzeichnet dass**, die die Anzeige zu einem Zeitpunkt vor der Übertragungszeit der Programme generiert wird.

7. System gemäß Anspruch 1, **dadurch gekennzeichnet dass**, die Anzeige in feststehenden Zeitintervallen aufrollt.

8. System gemäß Anspruch 1, **dadurch gekennzeichnet dass**, die Anzeige (2;6) die erzeugt wird, Informationen über aktuelle und folgende Programme die auf einem Kanal gezeigt werden enthält.

## Revendications

1. Système de télévision comprenant un écran d'affichage (4 ; 8) lequel est connecté à un moyen récepteur afin de recevoir une diffusion de données numériques à partir d'un emplacement distant, ledit moyen récepteur incluant la fonction destinée à générer un guide de programmes électronique (GPE) sur l'écran d'affichage (4 ; 8), ledit GPE étant généré à partir de données reçues et concernant des programmes de télévision et des canaux de télévision disponibles pour être sélectionnés à des fins de visualisation au moment précis où le système est utilisé et/ou sera utilisé à l'avenir, cas dans lequel des moyens de sélection sont prévus pour permettre au téléspectateur d'identifier et de sélectionner un sous-ensemble de canaux à partir des canaux de télévision disponibles en vue de leur affichage par l'intermédiaire du système et cas dans lequel, au moment de la transmission et/ou avant le moment de la transmission des programmes sur un ou plusieurs canaux dans le sous-ensemble de canaux, un affichage (2 ; 6) sera généré sur écran pour indiquer au téléspectateur les informations relatives aux programmes, ledit affichage (2 ; 6), lorsqu'il est généré, étant un affichage animé en ce sens que l'affichage (2 ; 6) change dans le temps alors que des lignes de texte relatives auxdits programmes sont introduites sur l'affichage, et sont retirées de l'affichage, après des intervalles de temps successifs, les lignes successives de texte étant reliées en boucle à la manière d'un carrousel, et chacune desdites lignes de texte étant relative auxdits programmes, la génération de l'affichage étant réalisée par le moyen récepteur de données en ce qui concerne la réception de données et qui indique qu'un programme est sur le point de démarrer ou la réception de données qui indique que le programme précédent est terminé et à ce moment-là l'affichage est généré sur l'écran de sorte à alerter la personne regardant le système de télévision ; ledit affichage indiquant au moins le nom du canal et l'intitulé desdits programmes qui sont sur le point de commencer sur les canaux parmi le sous-ensemble de canaux, et l'affichage étant généré sans que le téléspectateur ait besoin d'interagir avec le système en ce qui concerne les programmes et sans qu'il ait besoin d'avoir connaissance des programmes avant que l'affichage ne soit généré.

2. Système, selon la revendication 1, **caractérisé en ce que** le GPE génère l'affichage (2 ; 6) pour que ce dernier comporte l'horaire auquel le programme est censé être transmis.

3. Système, selon la revendication 1, **caractérisé en ce que** le sous-ensemble de canaux sélectionnés est généré par le moyen récepteur de données en réaction aux instructions de sélection données par le téléspectateur, ces instructions étant reçues par l'appareil récepteur de données.

4. Système, selon la revendication 1, **caractérisé en ce que** l'affichage (2 ; 6) est généré sous la forme d'un affichage en fenêtre (2 ; 6) sur l'écran d'affichage (4 ; 8) pour qu'il soit possible à l'utilisateur de continuer à avoir une visualisation partielle de n'importe quel affichage vidéo qu'il regardait à ce moment-là.

5. Système, selon la revendication 1, **caractérisé en ce que** l'affichage (2 ; 6) reste sur l'écran (4 ; 8) pendant un intervalle de temps prédéterminé, après quoi l'affichage (2 ; 6) est enlevé une fois que l'intervalle de temps s'est écoulé.

6. Système, selon la revendication 1, **caractérisé en ce que** l'affichage est généré à un certain moment avant l'horaire de transmission du programme.

7. Système, selon la revendication 1, **caractérisé en ce que** le défilement se produit à des intervalles de temps définis.

8. Système, selon la revendication 1, **caractérisé en ce que** l'affichage (2 ; 6) qui est généré comporte des informations concernant des programmes qui sont en train d'être diffusés sur un canal et les prochains programmes qui vont être diffusés sur un canal.
